(19) **Europäisches Patentamt / European Patent Office / Office européen des brevets**

(11) **EP 4 546 216 A1**

(12) **EUROPEAN PATENT APPLICATION**
published in accordance with Art. 153(4) EPC

(43) Date of publication:
**30.04.2025  Bulletin 2025/18**

(21) Application number: **23912567.7**

(22) Date of filing: **14.11.2023**

(51) International Patent Classification (IPC):
**G06N 3/0495** (2023.01)   **G06N 3/045** (2023.01)
**G06N 3/08** (2023.01)

(52) Cooperative Patent Classification (CPC):
**G06N 3/045; G06N 3/0495; G06N 3/08**

(86) International application number:
**PCT/KR2023/018220**

(87) International publication number:
**WO 2024/143890 (04.07.2024 Gazette 2024/27)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **26.12.2022  KR 20220184863**

(71) Applicant: **Samsung Electronics Co., Ltd.**
**Suwon-si, Gyeonggi-do 16677 (KR)**

(72) Inventor: **JEONG, Hyukjin**
**Suwon-si Gyeonggi-do 16677 (KR)**

(74) Representative: **Arnold & Siedsma**
**Bezuidenhoutseweg 57**
**2594 AC The Hague (NL)**

(54) **NEURAL NETWORK MODEL QUANTIZATION DEVICE AND METHOD**

(57)    An electronic apparatus is provided. The electronic apparatus includes a memory and a processor, wherein the processor is configured to acquire a neural network model, test data for the neural network model, and information on required performance condition, quantize a layer among a plurality of layers comprised in the neural network model and acquire a first quantized neural network model, transmit the first quantized neural network model and the test data to a target apparatus, receive, from the target apparatus, result data acquired from the first quantized neural network model with the test data as an input, and profile information of the target apparatus related to the first quantized neural network model, and based on the result data and the profile information, based on the first quantized neural network model satisfying the required performance condition, add the first quantized neural network model to available quantized neural network model candidates.

**FIG. 3**

S305 — QUANTIZE WITH NTH BIT-PRECISION
S310 — TRANSMIT A QUANTIZED NEURAL NETWORK MODEL AND TEST DATA TO THE TARGET APPARATUS
S315 — ACQUIRE RESULT DATA ACQUIRED FROM THE QUANTIZED NEURAL NETWORK MODEL AND PROFILE INFORMATION OF THE TARGET APPARATUS RELATED TO THE QUANTIZED NEURAL NETWORK MODEL FROM THE TARGET APPARATUS
S320 — IDENTIFY A QUANTIZATION ERROR BETWEEN THE NEURAL NETWORK MODEL AND THE QUANTIZED NEURAL NETWORK MODEL BY USING THE ACQUIRED RESULT DATA
S325 — ADD A NEURAL NETWORK MODEL SATISFYING THE REQUIRED CONDITIONS FOR PERFORMANCE AMONG THE QUANTIZED NEURAL NETWORK MODELS TO THE CANDIDATES FOR THE USABLE QUANTIZED NEURAL NETWORK MODELS
S330 — IS THE NUMBER OF THE MODELS ADDED TO THE CANDIDATES FOR THE USABLE QUANTIZED NEURAL NETWORK MODELS SMALLER THAN A PREDETERMINED NUMBER K1?
S335 — IDENTIFY A NEURAL NETWORK MODEL HAVING THE HIGHEST SCORE AMONG THE CANDIDATES FOR THE USABLE QUANTIZED NEURAL NETWORK MODELS
S340 — ACQUIRE SCORES FOR THE REMAINING MODELS AMONG THE QUANTIZED NEURAL NETWORK MODELS
S345 — IDENTIFY NEURAL NETWORK MODELS IN A PREDETERMINED NUMBER K2 IN THE ORDER OF HAVING HIGHER SCORES AMONG THE REMAINING MODELS
S350 — QUANTIZE THE NEURAL NETWORK MODEL WITH THE (N+1)TH BIT-PRECISION

EP 4 546 216 A1

**Description**

[Technical Field]

The disclosure relates to an electronic apparatus and a control method thereof. More particularly, the disclosure relates to an electronic apparatus that quantizes a neural network model, and a control method thereof.

[Background Art]

Recently, artificial intelligence systems implementing intelligence of a human level are being developed. An artificial intelligence system refers to a system wherein a machine learns and determines by itself, unlike rule-based smart systems of the related art, and it is being utilized in various ranges, such as voice recognition, image recognition, and future prediction, or the like. More particularly, recently, artificial intelligence systems that address given issues based on deep learning are being developed.

Application of deep learning is showing very high performance in voice and image recognition and natural language processing, or the like. Accordingly, there is also an increasing demand for on-device deep learning for real life artificial intelligence services.

However, deep learning requires a lot of operations and a big memory capacity, and thus it is difficult to achieve high performance in an embedded system wherein there are restrictions in hardware resources.

For resolving this, light-weighted deep learning models having low operational complexity are being developed. As one of light-weighted deep learning model technologies, there is a quantization technology of limiting values that can be expressed by weights of a deep learning model.

The above information is presented as background information only to assist with an understanding of the disclosure. No determination has been made, and no assertion is made, as to whether any of the above might be applicable as prior art with regard to the disclosure.

[Disclosure]

[Technical Solution]

Aspects of the disclosure are to address at least the above-mentioned problems and/or disadvantages and to provide at least the advantages described below. Accordingly, an aspect of the disclosure is to provide an apparatus and a method for quantizing neural network model.

Additional aspects will be set forth in part in the description which follows and, in part, will be apparent from the description, or may be learned by practice of the presented embodiments.

In accordance with an aspect of the disclosure, an electronic apparatus is provided. The electronic apparatus includes a memory and at least one processor, wherein the at least one processor is configured to acquire a neural network model, test data for the neural network model, and information on required performance condition, quantize at least one layer among a plurality of layers comprised in the neural network model and acquire a first quantized neural network model, transmit the first quantized neural network model and the test data to a target apparatus, receive, from the target apparatus, result data acquired from the first quantized neural network model with the test data as an input, and profile information of the target apparatus related to the first quantized neural network model, and based on the result data and the profile information, based on the first quantized neural network model satisfying the required performance condition, add the first quantized neural network model to available quantized neural network model candidates.

In accordance with another aspect of the disclosure, a method of controlling an electronic apparatus is provided. The method includes acquiring a neural network model, test data for the neural network model, and information on required performance condition, quantizing at least one layer among a plurality of layers comprised in the neural network model and acquiring a first quantized neural network model, transmitting the first quantized neural network model and the test data to a target apparatus, receiving, from the target apparatus, result data acquired from the first quantized neural network model with the test data as an input, and profile information of the target apparatus related to the first quantized neural network model, and based on the result data and the profile information, based on the first quantized neural network model satisfying the required performance condition, adding the first quantized neural network model to available quantized neural network model candidates.

In accordance with another aspect of the disclosure, one or more non-transitory computer readable storage media storing computer-executable instructions is provided. The computer-executable instructions, when executed by at least one processor of an electronic apparatus, configure the electronic device to perform operations including acquiring a neural network model, test data for the neural network model, and information on required performance condition, quantizing at least one layer among a plurality of layers comprised in the neural network model and acquiring a first quantized neural network model, transmitting the first quantized neural network model and the test data to a target apparatus, receiving, from the target apparatus, result data acquired from the first quantized neural network model with the test data as an input, and profile information of the target apparatus related to the first quantized neural network model, and based on the result data and the profile information, based on the first quantized neural network model satisfying the required performance condition, adding the first quantized neural network model to available quantized neural network model candidates.

Other aspects, advantages, and salient features of the disclosure will become apparent to those skilled in the art from the following detailed description, which, taken in conjunction with the annexed drawings, discloses various embodiments of the disclosure.

[Description of Drawings]

The above and other aspects, features, and advantages of certain embodiments of the disclosure will be more apparent from the following description taken in conjunction with the accompanying drawings, in which:

FIG. 1 is a block diagram for illustrating a configuration of an electronic apparatus according an embodiment of the disclosure;
FIG. 2 is a diagram for illustrating an operation of an electronic apparatus according to an embodiment of the disclosure;
FIG. 3 is a flowchart for illustrating an operation of an electronic apparatus according to an embodiment of the disclosure;
FIG. 4 is a diagram for illustrating a method for an electronic apparatus to acquire a quantized neural network model according to an embodiment of the disclosure;
FIG. 5 is a diagram for illustrating a method for an electronic apparatus to acquire profile information of a target apparatus and a quantization error according to an embodiment of the disclosure;
FIG. 6 is a flowchart for illustrating a method for an electronic apparatus to acquire profile information of a target apparatus and a quantization error according to an embodiment of the disclosure;
FIG. 7 is a sequence diagram for illustrating operations of an electronic apparatus and a target apparatus according to an embodiment of the disclosure; and
FIG. 8 is a flowchart for illustrating a control method of an electronic apparatus according to an embodiment of the disclosure.

The same reference numerals are used to represent the same elements throughout the drawings.

[Mode for Invention]

The following description with reference to the accompanying drawings is provided to assist in a comprehensive understanding of various embodiments of the disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope and spirit of the disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the disclosure. Accordingly, it should be apparent to those skilled in the art that the following description of various embodiments of the disclosure is provided for illustration purpose only and not for the purpose of limiting the disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces. Moreover, in describing the disclosure, in case it is determined that detailed explanation of related known functions or features may unnecessarily confuse the gist of the disclosure, the detailed explanation will be omitted.

In addition, the embodiments described below may be modified in various different forms, and the scope of the technical idea of the disclosure is not limited to the embodiments below. Rather, these embodiments are provided to make the disclosure more sufficient and complete, and to fully convey the technical idea of the disclosure to those skilled in the art.

Moreover, the terms used in the disclosure are used only to describe specific embodiments of the disclosure, and are not intended to limit the scope of the disclosure. Further, singular expressions include plural expressions, unless defined obviously differently in the context.

**In** addition, in the disclosure, expressions, such as "have," "may have," "include," and "may include" denote the existence of such characteristics (e.g., elements, such as numbers, functions, operations, and components), and do not exclude the existence of additional characteristics.

Moreover, in the disclosure, the expressions "A or B," "at least one of A and/or B," or "one or more of A and/or B" and the like may include all possible combinations of the listed items. For example, "A or B," "at least one of A and B," or "at least one of A or B" may refer to all of the following cases: (1) comprising at least one A, (2) comprising at least one B, or (3) comprising at least one A and at least one B.

**In** addition, the expressions "first," "second," and the like used in the disclosure may describe various elements regardless of any order and/or degree of importance. Moreover, such expressions are used only to distinguish one element from another element, and are not intended to limit the elements.

Meanwhile, the description in the disclosure that one element (e.g., a first element) is "(operatively or communicatively) coupled with/to" or "connected to" another element (e.g., a second element) should be interpreted to include both the case where the one element is directly coupled to the other element, and the case where the one element is coupled to the other element through still another element (e.g., a third element).

**In** contrast, the description that one element (e.g., a first element) is "directly coupled" or "directly connected" to another element (e.g., a second element) can be interpreted to mean that still another element (e.g., a third element) does not exist between the one element and the other element.

Moreover, the expression "configured to" used in the disclosure may be interchangeably used with other expressions, such as "suitable for," "having the capacity to," "designed to," "adapted to," "made to," and "capable of," depending on cases. Meanwhile, the term "configured to" does not necessarily mean that an apparatus is "specifically designed to" in terms of hardware.

Instead, under some circumstances, the expression "an apparatus configured to" may mean that the apparatus "is capable of" performing an operation together with another apparatus or component. For example, the phrase "a processor configured to perform A, B, and C" may mean a dedicated processor (e.g., an embedded processor) for performing the corresponding operations, or a generic-purpose processor (e.g., a central processing unit (CPU) or an application processor) that can perform the corresponding operations by executing one or more software programs stored in a memory device.

Further, in the embodiments of the disclosure, 'a module' or 'a part' may perform at least one function or operation, and may be implemented as hardware or software, or as a combination of hardware and software. Moreover, a plurality of 'modules' or 'parts' may be integrated into at least one module and implemented as at least one processor, excluding 'a module' or 'a part' that needs to be implemented as specific hardware.

Meanwhile, various elements and areas in the drawings were illustrated schematically. Accordingly, the technical idea of the disclosure is not limited by the relative sizes or intervals illustrated in the accompanying drawings.

Hereinafter, embodiments according to the disclosure will be described in detail with reference to the accompanying drawings, such that those having ordinary skill in the art to which the disclosure belongs can easily carry out the disclosure.

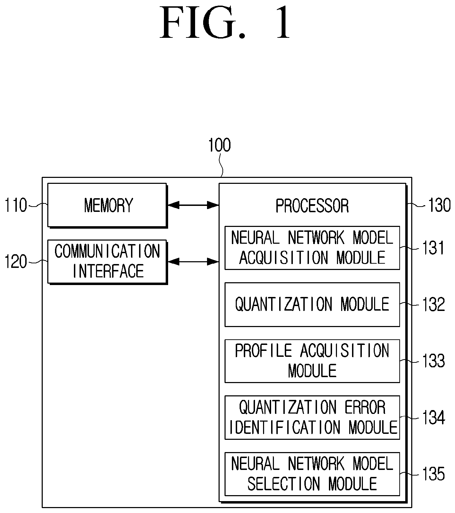

FIG. 1 is a block diagram for illustrating a configuration of an electronic apparatus according to an embodiment of the disclosure.

Referring to FIG. 1, an electronic apparatus 100 may include a memory 110, a communication interface 120, and a processor 130. In the electronic apparatus 100, some of the above components may be omitted, or other components may be further included.

In addition, the electronic apparatus 100 may be implemented as a server, but this is merely an example, and the electronic apparatus 100 may be implemented in various forms, such as a smartphone, a television (TV), a smart TV, a set-top box, a mobile phone, a personal digital assistant (PDA), a laptop, a media player, an e-book terminal, a terminal for digital broadcasting, a navigation, a kiosk, an MP3 player, a wearable apparatus, a home appliance, and other mobile or non-mobile computing apparatuses, or the like.

The memory 110 may store at least one instruction regarding the electronic apparatus 100. The memory 110 may also store an operating system (O/S) for operating the electronic apparatus 100. In addition, the memory 110 may store various kinds of software programs or applications for the electronic apparatus 100 to operate according to the various embodiments of the disclosure. Further, the memory 110 may include a semiconductor memory, such as a flash memory, or a magnetic storage medium, such as a hard disk, or the like.

Specifically, the memory 110 may store various kinds of software modules for the electronic apparatus 100 to operate according to the various embodiments of the disclosure, and the processor 130 may control the operations of the electronic apparatus 100 by executing the various kinds of software modules stored in the memory 110. For example, the memory 110 may be accessed by the processor 130, and reading/recording/correction/deletion/update, or the like, of data by the processor 130 may be performed.

Meanwhile, in the disclosure, the term memory 110 may be used as a meaning comprising the memory 110, a read-only memory (ROM) (not shown) and a random-access memory (RAM) (not shown) inside the processor 130, or a memory card (not shown) (e.g., a micro secure digital (SD) card, a memory stick) installed on the electronic apparatus 100.

Moreover, the communication interface 120 includes circuitry, and is a component that can communicate with an external apparatus and a server. The communication interface 120 may perform communication with an external device or a server based on a wired or wireless communication method. The communication interface 120 may include a Bluetooth module (not shown), a wi-fi module (not shown), an infrared (IR) module, a local area network (LAN) module, an Ethernet module, or the like. Here, each communication module may be implemented in the form of at least one hardware chip. A wireless communication module may include at least one communication chip that performs communication according to various wireless communication protocols, such as Zigbee, a universal serial bus (USB), a mobile industry processor interface camera serial interface (MIPI CSI), 3rd generation (3G), 3rd generation partnership project (3GPP), long term evolution (LTE), LTE advanced (LTE-A), 4th generation (4G), 5th generation (5G), or the like, other than the aforementioned communication methods. However, these are merely an example, and the communication interface 120 may use at least one communication module among various communication modules.

The processor 130 may control the overall operations and functions of the electronic apparatus 100. Specifically, the processor 130 may be connected with the components of the electronic apparatus 100 comprising the memory 110, and may control the overall operations of the electronic apparatus 100 by executing the at least one instruction stored in the memory 110 as described above.

The processor 130 may be implemented by various methods. For example, the processor 130 may be implemented as at least one of an application specific integrated circuit (ASIC), a logic integrated circuit, an embedded processor, a microprocessor, a hardware control logic, a hardware finite state machine (FSM), or a digital signal processor (DSP). Meanwhile, in the disclosure, the term processor 130 may be used as a meaning comprising a central processing unit (CPU), a graphics processing unit (GPU), a main processing unit (MPU), or the like.

More particularly, the processor 130 may include at least one processor. Specifically, the at least one processor may include one or more of a central processing unit (CPU), a graphics processing unit (GPU), an accelerated processing unit (APU), a many integrated core (MIC), a digital signal processor (DSP), a neural processing unit (NPU), a hardware accelerator, or a machine learning accelerator. The at least one processor may control one or a random combination of the other components of the electronic apparatus, and perform an operation related to communication or data processing. Moreover, the at least one processor may execute one or more programs or instructions stored in the memory. For example, the at least one processor may perform the method according to one or more embodiments of the disclosure by executing the at least one instruction stored in the memory.

In case the method according to one or more embodiments of the disclosure includes a plurality of operations, the plurality of operations may be performed by one processor, or performed by a plurality of processors. For example, when a first operation, a second operation, and a third operation are performed by the method according to one or more embodiments of the disclosure, all of the first operation, the second operation, and the third operation may be performed by a first processor, or the first operation and the second operation may be performed by the first processor (e.g., a generic-purpose processor), and the third operation may be performed by a second processor (e.g., an artificial intelligence-dedicated processor).

The at least one processor may be implemented as a single core processor comprising one core, or it may be implemented as one or more multicore processors comprising a plurality of cores (e.g., multicores of the same kind or multicores of different kinds). In case the at least one processor is implemented as multicore processors, each of the plurality of cores comprised in the multicore processors may include an internal memory of the processor, such as a cache memory, an on-chip memory, or the like, and a common cache shared by the plurality of cores may be comprised in the multicore processors. Moreover, each of the plurality of cores (or some of the plurality of cores) comprised in the multicore processors may independently read a program instruction for implementing the method according to one or more embodiments of the disclosure and perform the instruction, or the plurality of entire cores (or some of the cores) may be linked with one another, and read a program instruction for implementing the method according to one or more embodiments of the disclosure and perform the instruction.

In case the method according to one or more embodiments of the disclosure includes a plurality of operations, the plurality of operations may be performed by one core among the plurality of cores comprised in the multicore processors, or they may be implemented by the plurality of cores. For example, when the first operation, the second operation, and the third operation are performed by the method according to one or more embodiments of the disclosure, all of the first operation, the second operation, and the third operation may be performed by a first core comprised in the multicore processors, or the first operation and the second operation may be performed by the first core comprised in the multicore processors, and the third operation may be performed by a second core comprised in the multicore processors.

In the embodiments of the disclosure, the processor 130 may mean a system on chip (SoC) wherein at least one processor and other electronic components are integrated, a single core processor, a multicore processor, or a core comprised in the single core processor or the multicore processor. Moreover, here, the core may be implemented as a CPU, a GPU, an APU, a MIC, a DSP, an NPU, a hardware accelerator, or a machine learning accelerator, or the like, but the embodiments of the disclosure are not limited thereto.

Operations of the processor 130 for implementing the various embodiments of the disclosure may be implemented through a plurality of modules.

Specifically, data regarding the plurality of modules according to the disclosure may be stored in the memory 110, and the processor 130 may access the memory 110 and load the data regarding the plurality of modules in the memory or the buffer inside the processor 130, and then implement the various embodiments according to the disclosure by using the plurality of modules. Here, the plurality of modules may include a neural network model acquisition module 131, a quantization module 132, a profile acquisition module 133, a quantization error identification module 134, and a neural network model selection module 135.

Meanwhile, at least one of the plurality of modules according to the disclosure may be implemented as hardware, and comprised inside the processor 130 in the form of a system on chip.

Alternatively, at least one of the plurality of modules according to the disclosure may be implemented as a separate external apparatus, and the electronic apparatus 100 and each module may perform operations according to the disclosure while performing communication.

Hereinafter, operations of the electronic apparatus 100 according to the disclosure will be described in detail with reference to the accompanying drawings.

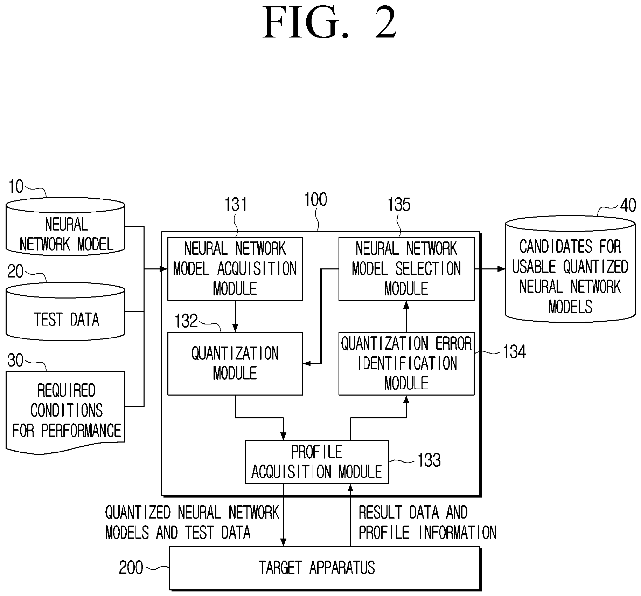

FIG. 2 is a diagram for illustrating an operation of an electronic apparatus according to an embodiment of the disclosure. Referring to FIG. 2, the neural network model acquisition module 131 may acquire at least one of a neural network model 10, test data 20 regarding the neural network model, or information 30 on required performance condition.

Here, the neural network model acquisition module 131 may acquire at least one of the neural network model 10, the test data 20 regarding the neural network model, or the information 30 on the required performance condition from an external server, an external apparatus, or a target apparatus 200 through the communication interface 120.

Alternatively, at least one of the neural network model 10, the test data 20 regarding the neural network model 20, or the information 30 on the required performance condition may be stored in the memory 110.

Here, the neural network model 10 may be a neural network model that was trained in advance. Moreover, here, each weight constituting a plurality of layers comprised in the neural network model 10 may be a floating point number. For example, each weight may be expressed by a Float 32 format.

Moreover, the test data 20 regarding the neural network model may mean test data for evaluating the performance of the neural network model. Specifically, the test data 20 may include data for acquiring result data of the neural network model 10 or a quantized neural network model. Here, the result data may mean data output by the neural network model 10 or the quantized neural network model when the test data 20 is input into the neural network model 10 or the quantized neural network model.

Further, the required performance condition may mean at least one condition that the performance of the quantized neural network model should satisfy in the target apparatus 200. Here, the required performance condition may mean performance condition required by a specific application. For example, the required performance condition may include at least one of inference latency time incurred while inference of the neural network model was being performed in the target apparatus 200, the memory use amount and the power consumption of the target apparatus 200, accuracy of the quantized neural network model, a quantization error between the quantized neural network model and the neural network model 10, or the size of the quantized neural network model.

The quantization module 132 may quantize at least one layer among the plurality of layers comprised in the neural network model 10 with first bit-precision, and acquire a quantized neural network model.

When a quantized neural network model is acquired, the profile acquisition module 133 may transmit the quantized neural network model and the test data 20 to the target apparatus 200.

Thereafter, the target apparatus 200 may perform inference of the quantized neural network model by using the received quantized neural network model and test data 20.

When the quantized neural network model and the test data 20 are received, the target apparatus 200 may perform inference of the received quantized neural network model, and acquire result data of the quantized neural network model and profile information of the target apparatus 200 related to the quantized neural network model.

Here, the result data for the quantized neural network model may mean data that is output by the quantized neural network model when the test data 20 is respectively input into each quantized neural network model. For example, if the quantized neural network model is a model classifying classes, the result data may include a probability value for the predicted class.

The profile information of the target apparatus 200 related to the quantized neural network model may include information on at least one of the time incurred for inference while the target apparatus 200 was performing inference of the quantized neural network model (i.e., inference latency), the memory use amount incurred for the inference, or the power consumption incurred for the inference.

Specifically, the target apparatus 200 may perform inference of the quantized neural network model by using the test data 20. For example, the target apparatus 200 may input the test data 20 into the quantized neural network model.

Here, the target apparatus 200 may perform inference of the quantized neural network model by using the test data 20, and acquire result data output by the quantized neural network model. The target apparatus 200 may perform inference of the quantized neural network model by using the test data 20, and acquire profile information of the target apparatus 200 related to the quantized neural network model.

When the result data and the profile information are acquired, the target apparatus 200 may transmit the result data and the profile information to the electronic apparatus 100. For example, the profile acquisition module 133 may acquire, from the target apparatus 200, the result data acquired from the quantized neural network model and the profile information of the target apparatus 200 related to the quantized neural network model.

Then, by using the acquired result data, the quantization error identification module 134 may identify a quantization error between the neural network model 10 and the quantized neural network model.

Specifically, the quantization error identification module 134 may compare the result data of the quantized neural network model acquired by using the test data 20 and the result data of the neural network model 10 acquired by using the test data 20, and identify a quantization error between the neural network model 10 and the quantized neural network model.

When the quantization error is identified, the neural network model selection module 135 may identify whether the quantized neural network model satisfies the required performance condition. If the quantized neural network model satisfies the required performance condition, the neural network model selection module 135 may add the quantized neural network model to candidates 40 for usable quantized neural network models.

Meanwhile, if the quantized neural network model does not satisfy the required performance condition, the neural network model selection module 135 may quantize the neural network model 10 with second bit-precision based on information on the quantization method by which the quantized neural network model was quantized, and acquire a neural network model quantized with the second bit-precision.

Then, the plurality of modules may repeatedly perform the aforementioned operations and quantize the neural network model 10, and update the candidates 40 for the usable quantized neural network models by using the quantized neural network model.

The operations of the electronic apparatus 100 comprising a plurality of modules of quantizing the neural network model 10, and updating the candidates 40 for the usable quantized neural network models by using the quantized neural network model will be described through the drawings below.

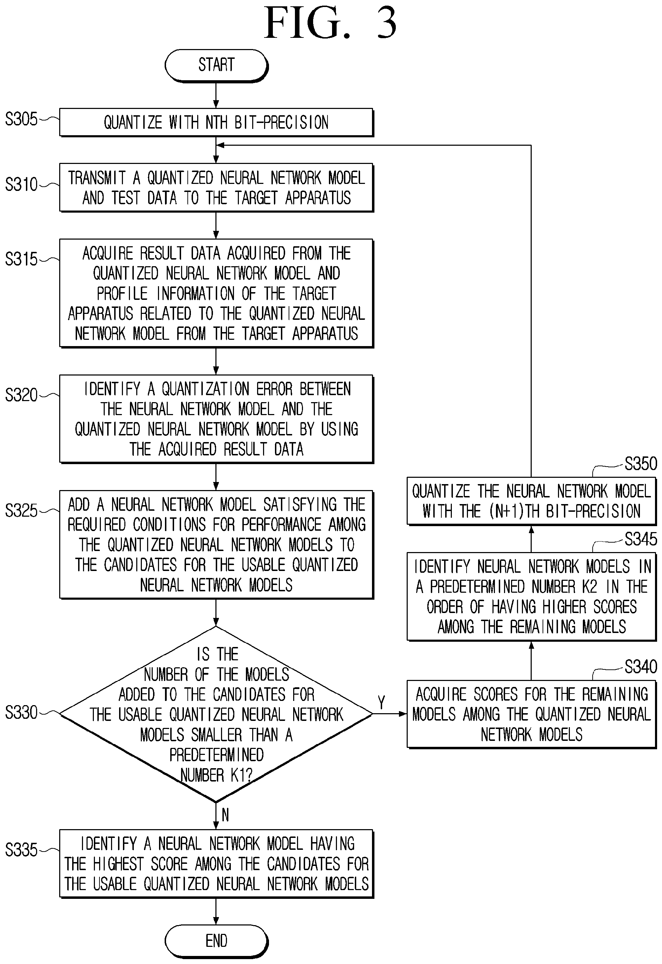

FIG. 3 is a flowchart for illustrating an operation of an electronic apparatus according to an embodiment of the disclosure.

Referring to FIG. 3, the processor 130 may quantize at least one layer among the plurality of layers comprised in the neural network model 10 with the nth bit-precision in operation S305. Here, the processor 130 may quantize the neural network model 10 with the nth bit-precision, and acquire a first quantized neural network model. Specifically, the processor 130 may quantize the neural network model 10 with the nth bit-precision, and acquire a plurality of first quantized neural network models comprising the first quantized neural network model. Here, n may be a natural number.

Here, if n is 1, the processor 130 may quantize the neural network model 10 with first bit-precision, and acquire a neural network model quantized with the first bit-precision. Here, the processor 130 may quantize at least one layer among the plurality of layers comprised in the neural network model 10 with the first bit-precision, and quantize the remaining layers excluding the at least one layer among the plurality of layers with the lowest bit-precision.

The first bit-precision may mean bit-precision that is higher than the lowest bit-precision by one step. Here, information on the lowest bit-precision may be stored in the memory 110.

Further, when n is 2 or bigger, the method for the processor 130 to quantize the neural network model 10 may be identical to the method that will be described below in operation S350.

Specifically, the processor 130 may quantize a weight comprised in at least one layer among the plurality of layers comprised in the neural network model 10 and a middle value output by the at least one layer with the nth bit.

The processor 130 may quantize weights comprised in the remaining layers excluding the at least one layer among the plurality of layers comprised in the neural network model 10 and middle values output by the remaining layers with the lowest bit-precision.

Here, the processor 130 may vary a layer to be quantized among the plurality of layers comprised in the neural network model 10, and acquire a plurality of first quantized neural network models comprising the first quantized neural network model.

For example, the processor 130 may select a layer to be quantized with the first bit-precision in the neural network model 10, and quantize the selected layer with the first bit-precision. For example, the lowest bit-precision may be four bit-precision, and the first bit-precision may be five bit-precision. Here, the processor 130 may quantize at least one layer among the plurality of layers with the five bit-precision, and quantize the remaining layers excluding the at least one layer among the plurality of layers with the four bit-precision. For example, in case there are three layers comprised in the neural network model 10, the processor 130 may quantize each layer in the order of [5bit, 4bit, 4bit], [4bit, 5bit, 4bit], or [4bit, 4bit, 5bit], [5bit, 5bit, 4bit], [5bit, 4bit, 5bit], [4bit, 5bit, 5bit], or [5bit, 5bit, 5bit], and acquire a plurality of first quantized neural network models.

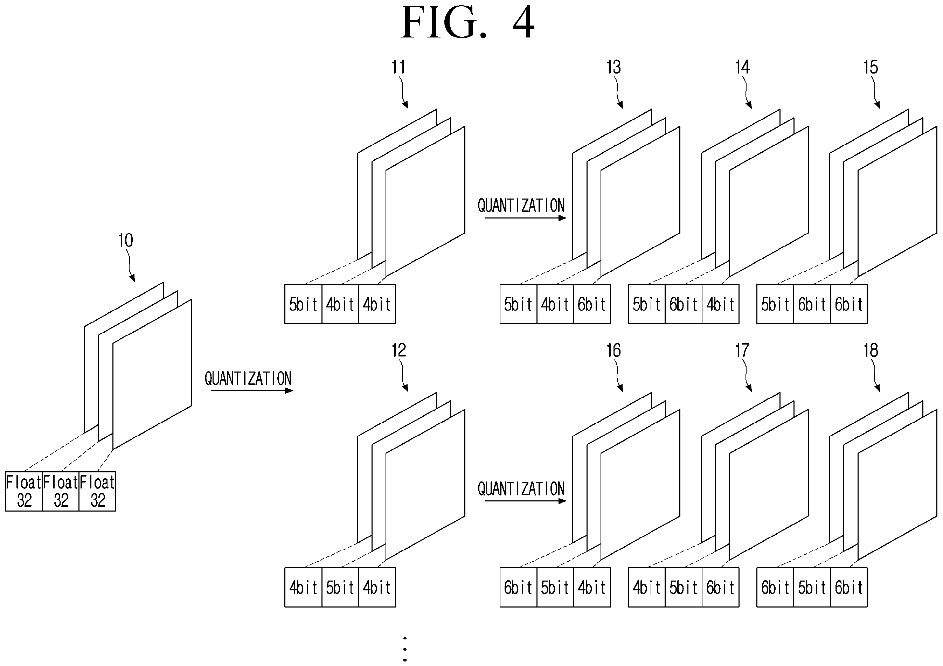

Referring to FIG. 4, the processor 130 may select the first layer in the neural network model 10 as the layer to be quantized, and quantize the first layer in the neural network model 10 with the five bit-precision, and quantize the remaining layers with the four bit-precision, and acquire the first quantized neural network model 11.

Alternatively, the processor 130 may select the second layer in the neural network model 10 as the layer to be quantized, and quantize the second layer in the neural network model 10 with the five bit-precision, and quantize the remaining layers with the four bit-precision, and acquire the first quantized neural network model 12.

For example, the processor 130 may vary a layer to be quantized with the first bit-precision in the neural network model 10, and acquire a plurality of first quantized layers.

Thereafter, the processor 130 may transmit the quantized neural network model and the test data 20 to the target apparatus 200 in operation S310.

Specifically, when the neural network model 10 is quantized, the processor 130 may transmit the first quantized neural network model and the test data 20 to the target apparatus 200. Here, the processor 130 may transmit the plurality of first quantized neural network models comprising the first quantized neural network model and the test data 20 to the target apparatus 200. Here, in case there is history that the test data 20 was previously transmitted to the target apparatus 200, the processor 130 may exclude the test data 20, and transmit the plurality of first quantized neural network models comprising the first quantized neural network model to the target apparatus 200.

Then, the target apparatus 200 may perform inference of the first quantized neural network model by using the received first quantized neural network model and test data 20. Further, the target apparatus 200 may perform inference of the first quantized neural network model, and acquire result data and profile information of the target apparatus 200 for the first quantized neural network model. Then, the target apparatus 200 may transmit the acquired result data and profile information of the target apparatus 200 to the electronic apparatus 100. For example, the electronic apparatus 100 may acquire the result data acquired from the first neural network model with the test data 20 as an input and the profile information of the target apparatus 200 related to the first quantized neural network model from the target apparatus 200.

Specifically, the target apparatus 200 may perform inference of each of the plurality of first quantized neural network models comprising the first quantized neural network model by using the test data 20, and acquire the result data of each of the plurality of first quantized neural network models and the profile information of the target apparatus 200 related to each of the plurality of first quantized neural network models. Then, the target apparatus 200 may transmit the result data acquired from each of the plurality of first neural network models with the test data as an input and the profile information of the target apparatus 200 related to each of the plurality of first neural network models to the electronic apparatus 100.

For example, the electronic apparatus 100 may acquire the result data acquired from each of the plurality of first neural network models with the test data as an input and the profile information of the target apparatus 200 related to the plurality of first quantized neural network models from the target apparatus 200 in operation S315.

Here, the result data for each of the plurality of first quantized neural network models comprising the first quantized neural network model may mean data that is output by each of the plurality of first quantized neural network models when the test data 20 is input into each of the plurality of first quantized neural network models. For example, if each of the plurality of first quantized neural network models is a model classifying classes, the result data may mean a probability value for the predicted class.

The profile information of the target apparatus 200 related to each of the plurality of first quantized neural network models comprising the first quantized neural network model may include information on at least one of the time incurred for inference while the target apparatus 200 was performing inference of each of the plurality of first quantized neural network models (i.e., inference latency), the memory use amount incurred for the inference, or the power consumption incurred for the inference.

Specifically, the target apparatus 200 may perform inference of each of the plurality of first quantized neural network models by using the test data 20. For example, the target apparatus 200 may input the test data 20 into each of the plurality of first quantized neural network models.

Here, the target apparatus 200 may perform inference of each of the plurality of first quantized neural network models comprising the first quantized neural network model by using the test data 20, and acquire result data output by each of the plurality of first quantized neural network models. Further, the target apparatus 200 may perform inference of each of the plurality of first quantized neural network models by using the test data 20, and acquire the profile information of the target apparatus 200 related to each of the plurality of first quantized neural network models.

Meanwhile, in the disclosure, the electronic apparatus 100 may transmit the plurality of first quantized neural network models comprising the first quantized neural network model and the test data to the target apparatus 200, and receive result data and profile information for each of the plurality of first quantized neural network models comprising the first quantized neural network model from the target apparatus 200. However, this is merely an example, and the electronic apparatus 100 may perform inference for each of the plurality of first quantized neural network models comprising the first quantized neural network model by using a software simulator comprised in the electronic apparatus 100. Here, the software simulator may be a program installed in the memory 110, but this is merely an example, and the software simulator may be a separate module comprised in the electronic apparatus 100. The electronic apparatus 100 may acquire result data and profile information for each of the at least one neural network model from the software simulator comprised in the electronic apparatus 100. Here, the result data and the profile information acquired by using the software simulator may be identical to the result data and the profile information received from the target apparatus 200.

Then, the processor 130 may identify a quantization error between the neural network model 10 and the quantized neural network model by using the acquired result data in operation S320.

Specifically, the processor 130 may identify a quantization error between the neural network model 10 and each of the plurality of first quantized neural network models comprising the first quantized neural network model by using the result data acquired from the target apparatus 200.

Specifically, the processor 130 may compare each of the result data of each of the plurality of first quantized neural network models comprising the first quantized neural network model acquired by using the test data 20 with the result data of the neural network model 10, and identify a quantization error between the neural network model 10 and each of the plurality of first quantized neural network models.

Then, the processor 130 may add a neural network model satisfying the required performance condition among the quantized neural network models to the candidates 40 for the usable quantized neural network models in operation S325.

Specifically, the processor 130 may identify whether each of the plurality of first quantized neural network models comprising the first quantized neural network model satisfies the required performance condition. Then, the processor 130 may add a neural network model satisfying the required performance condition among the plurality of first quantized neural network models to the candidates 40 for the usable quantized neural network models.

Here, if the first quantized neural network model satisfies the required performance condition, the processor 130 may add the first quantized neural network model to the candidates 40 for the usable quantized neural network models. Meanwhile, if the first quantized neural network model does not satisfy the required performance condition, and the number of the neural network models comprised in the candidates 40 for the usable quantized neural network models is smaller than a predetermined number, the processor 130 may quantize the neural network model 10 with the second bit-precision, and acquire a second quantized neural network model.

Specifically, the processor 130 may identify whether each of the plurality of first quantized neural network models satisfies the required performance condition. Here, the processor 130 may identify whether the profile information of the target apparatus 200 related to each of the plurality of first quantized neural network models satisfies the required performance condition.

Then, the processor 130 may identify a neural network model for which the profile information of the target apparatus 200 satisfies the required performance condition among the plurality of first quantized neural network models.

Then, the processor 130 may add the neural network model that satisfies the required performance condition among the plurality of first quantized neural network models to the candidates 40 for the usable quantized neural network models.

Then, the processor 130 may identify whether the number of the neural network models comprised in the candidates 40 for the usable quantized neural network models is smaller than a predetermined number k1 in operation S330.

Here, if the number of the neural network models comprised in the candidates 40 for the usable quantized neural network models is smaller than the predetermined number k1 in operation S330-Y, based on the profile information and the quantization error, the processor 130 may acquire scores for each of the remaining neural network models excluding the neural network models comprised in the candidates 40 for the usable quantized neural network models among the plurality of first quantized neural network models (i.e., the neural network models that do not satisfy the required performance condition among the plurality of first quantized neural network models) in operation S340. In the disclosure, a score may be a score indicating suitability for the required performance.

Specifically, the processor 130 may acquire scores for each of the conditions comprised in the required performance condition with respect to a quantized neural network model.

For example, the processor 130 may acquire a score regarding inference latency (a latency-aware score) for a specific quantized neural network model by using the following Equation 1.

Equation 1

$$Latency\text{-}aware\ Score = \frac{qerror\_lowest - qerror\_quantization}{latency\_quantization - latency\_lowest}$$

Here, qerror_lowest may mean a quantization error between a model which is the neural network model 10 quantized with the lowest bit-precision and the neural network model 10. Moreover, qerror_quantization may mean a quantization error between the specific quantized neural network model and the neural network model 10. In addition, latency_quantization may mean inference latency when the target apparatus 200 performs inference by using the specific quantized neural network model. Further, latency_lowest may mean inference latency when the target apparatus 200 performs inference by using the model which is the neural network model 10 quantized with the lowest bit-precision.

The processor 130 may acquire a score regarding a model size (a model size-aware score) for the specific quantized neural network model by using the following Equation 2.

Equation 2

$$Model\ size\text{-}aware\ Score = \frac{qerror\_lowest - qerror\_quantization}{size\_quantization - size\_lowest}$$

Here, size_quantization may mean the size of the specific quantized neural network model. Moreover, size_lowest may mean the size of the model which is the neural network model 10 quantized with the lowest bit-precision.

Further, the processor 130 may acquire a score regarding the memory use amount of the target apparatus 200 (a runtime memory-aware score) when the target apparatus 200 performs inference by using the specific quantized neural network model by using the following Equation 3.

Equation 3

$$Runtime\ memory\text{-}aware\ Score = \frac{qerror\_lowest - qerror\_quantization}{memory\_quantization - memory\_lowest}$$

Here, memory_quantization may mean the memory use amount of the target apparatus 200 when the target apparatus 200 performs inference by using the specific quantized neural network model. Moreover, memory_lowest may mean the memory use amount of the target apparatus 200 when the target apparatus 200 performs inference by using the model which is the neural network model 10 quantized with the lowest bit-precision.

In addition, the processor 130 may acquire a score for the power consumption of the target apparatus 200 (a power consumption-aware score) when the target apparatus 200 performs inference by using the specific quantized neural network model by using the following Equation 4.

Equation 4

$$Power\ consumption\text{-}aware\ Score = \frac{qerror\_lowest - qerror\_quantization}{power\_quantization - power\_lowest}$$

Here, power_quantization may mean the power consumption of the target apparatus 200 when the target apparatus 200 performs inference by using the specific quantized neural network model. Moreover, power_lowest may mean the power consumption of the target apparatus 200 when the target apparatus 200 performs inference by using the model which is the neural network model 10 quantized with the lowest bit-precision.

Then, the processor 130 may identify the weighted sum of the scores for each of the conditions comprised in the required performance condition as the score for the specific quantized neural network model.

For example, the processor 130 may identify the score for the specific quantized neural network model by using the following Equation 5.

Equation 5

$$Score = aS1 + bS2 + cS3 + dS4$$

Here, a, b, c, and d may be random real numbers. Moreover, S1, S2, S3, and S4 may be scores for each of the conditions comprised in the required performance condition. For example, S1 may mean a score for the inference latency, S2 may mean a score for the model size, S3 may mean a score for the memory use amount, and S4 may mean a score for the power consumption.

Then, the processor 130 may identify neural network models in a predetermined number k2 in the order of having higher scores among the remaining neural network models excluding the neural network models comprised in the candidates 40 for the usable quantized neural network models among the plurality of first quantized neural network models in operation S345.

Specifically, based on the acquired scores, the processor 130 may identify the neural network models in the predetermined number k2 in the order of having higher scores among the neural network models excluding the neural network models comprised in the candidates 40 for the usable quantized neural network models among the plurality of first quantized neural network models.

Meanwhile, here, the processor 130 may identify the neural network models in the predetermined number k2 based on the acquired scores and a specific limiting condition.

Specifically, the processor 130 may identify the neural network models satisfying the specific limiting condition among the neural network models excluding the neural network models comprised in the candidates 40 for the usable quantized neural network models among the plurality of first quantized neural network models. Then, the processor 130 may identify the neural network models in the predetermined number k2 in the order of having higher scores among the neural network models satisfying the specific limiting condition.

Here, the specific limiting condition may be a limiting condition for the profile information of the target apparatus 200. For example, the specific limiting condition may include at least one of a condition that the inference latency comprised in the profile information of the target apparatus 200 is smaller than or equal to a predetermined value, a condition that the memory use amount incurred for the inference is smaller than or equal to a predetermined value, or a condition that the power consumption incurred for the inference is smaller than or equal to a predetermined value.

For example, if the specific limiting condition is the condition that the inference latency is smaller than or equal to the predetermined value, the processor 130 may identify the neural network models in the predetermined number k2 in the order of having higher scores among the neural network models of which inference latency is smaller than or equal to the predetermined value among the neural network models excluding the neural network models comprised in the candidates 40 for the usable quantized neural network models among the plurality of first quantized neural network models.

Meanwhile, in the disclosure, the predetermined numbers k1 and k2 may be identical, but this is merely an example, and k1 and k2 may be different.

In addition, the predetermined numbers k1 and k2 may be fixed integers, but this is merely an example, and the numbers may vary according to the performance of the electronic apparatus 100 or the number of the layers comprised in the neural network model. For example, the predetermined numbers k1 and k2 may be determined by at least one of the layers comprised in the neural network model 10 or the performance of the electronic apparatus 100. Here, information on the predetermined numbers k1 and k2 may be stored in the memory 110 in advance, but this is merely an example, and the processor 130 may identify the predetermined numbers k1 or k2 based on the performance of the electronic apparatus 100 or the number of the layers comprised in the neural network model 10.

For example, if the performance of the electronic apparatus 100 is first performance, the processor 130 may identify m1 as the predetermined number k1 or k2. Moreover, if the performance of the electronic apparatus 100 is second performance higher than the first performance, the processor 130 may identify m2 higher than m1 as the predetermined number k1 or k2.

Alternatively, if the number of the layers comprised in the neural network model 10 is p1, the processor 130 may identify m1 as the predetermined number k1 or k2. Moreover, if the number of the layers comprised in the neural network model 10 is p2 higher than p1, the processor 130 may identify m2 higher than m 1 as the predetermined number k1 or k2.

Meanwhile, according to an embodiment of the disclosure, the processor 130 may identify quantized neural network models in the predetermined number k2 in the order of having higher scores. However, this is merely an example, and the processor 130 may identify the quantized neural network models in the number k2 by comparing a threshold value and the scores of the quantized neural network models.

Specifically, the processor 130 may identify the quantized neural network models in the number k2 by using statistical figures of the acquired scores. Here, the processor 130 may identify a standard deviation of the scores acquired from each of the neural network models excluding the models comprised in the candidates 40 for the usable quantized neural network models among the plurality of first quantized neural network models. Alternatively, the processor 130 may identify a standard deviation of the scores acquired from each of the neural network models satisfying the limiting condition among the neural network models not comprised in the candidates 40 for the usable quantized neural network models among the plurality of first quantized neural network models.

Then, when the standard deviation is identified, the processor 130 may identify the threshold value by using the following Equation 6.

### Equation 6

$$\text{Threshold Value} = n \times \text{standard deviation}$$

Here, n may be a random constant.

When the threshold value is identified, the processor 130 may identify neural network models of which scores are greater than or equal to the identified threshold value among the neural network models excluding the models comprised in the candidates 40 for the usable quantized neural network models among the plurality of first quantized neural network models. Alternatively, the processor 130 may identify neural network models of which scores are greater than or equal to the identified threshold value among the neural network models satisfying the limiting condition among the neural network models excluding the models comprised in the candidates 40 for the usable quantized neural network models among the plurality of first quantized neural network models. Here, the number of the identified neural network models may be k2.

For example, the number of the identified neural network models may change dynamically according to the statistical figures of the scores of the quantized neural network models.

Thereafter, based on information on the neural network models in the predetermined number k2, the processor 130 may quantize at least one layer among the plurality of layers comprised in the neural network model 10 with the (n+1)th bit-precision, and acquire the second quantized neural network model in operation S350.

Specifically, based on information on the quantization method by which the neural network models in the predetermined number k2 were quantized, the processor 130 may quantize at least one layer among the plurality of layers comprised in the neural network model 10 with the (n+1)th bit-precision, and acquire the second quantized neural network model.

Here, the processor 130 may quantize the at least one layer among the plurality of layers comprised in the neural network model 10 with the (n+1)th bit-precision, and acquire a plurality of second quantized neural network models comprising the second quantized neural network model. Here, the (n+1)th bit-precision may mean the bit-precision that is higher than the nth bit-precision by one step.

Specifically, the processor 130 may quantize the at least one layer quantized with the lowest bit-precision in one model among the neural network models in the predetermined number k2 with the (n+1)th bit-precision. Then, the processor 130 may quantize the layers excluding the at least one layer among the plurality of layers with the bit-precision identical to that of the one model.

Here, if n is 1, based on the information on the method by which the neural network models in the predetermined number k2 were quantized, the processor 130 may quantize the at least one layer among the plurality of layers comprised in the neural network model 10 with the second bit-precision, and acquire the plurality of second quantized neural network models comprising the second quantized neural network model.

Specifically, the processor 130 may quantize at least one layer among the layers quantized with the lowest bit-precision in one model among the neural network models in the predetermined number k2 among the plurality of layers with the second bit-precision. Then, among the plurality of layers comprised in the one model among the neural network models in the predetermined number k2, the processor 130 may quantize the remaining layers excluding the at least one layer with the bit-precision identical to that of the one model among the neural network models in the predetermined number k2.

For example, if the first quantized neural network model does not satisfy the required performance condition, the processor 130 may quantize at least one layer among the plurality of layers comprised in the neural network model 10 with the second bit-precision, and acquire a plurality of second quantized neural network models comprising a second quantized neural network model. For example, referring to FIG. 4, the first quantized neural network model may be a model 11 wherein three layers were quantized in the order of [5bit, 4bit, 4bit]. Here, the layers quantized with the lowest bit-precision may be the second layer and the third layer.

Here, the first bit-precision may be the five bit-precision, and the second bit-precision may be the six bit-precision. Here, the processor 130 may quantize the second layer or the third layer in the neural network model 10 with the six bit-precision, and quantize the remaining layers with the bit-precision identical to that of the first quantized neural network model 11. Accordingly, the processor 130 may quantize the layers comprised in the neural network model 10 in [5bit, 4bit, 6bit], and acquire a second quantized neural network model 13. Alternatively, the processor 130 may quantize the layers comprised in the neural network model 10 in [5bit, 6bit, 4bit], and acquire a second quantized neural network model 14. Alternatively, the processor 130 may quantize the layers comprised in the neural network model 10 in [5bit, 6bit, 6bit], and acquire a second quantized neural network model 15.

Alternatively, the first quantized neural network model may be a neural network model 12 wherein three layers were quantized in the order of [4bit, 5bit, 4bit]. Here, the layers quantized with the lowest bit-precision may be the first layer and the third layer.

Here, the first bit-precision may be the five bit-precision, and the second bit-precision may be the six bit-precision. Here, the processor 130 may quantize the first layer or the third layer in the neural network model 10 with the second bit-precision (the six bit-precision), and quantize the remaining layers with the bit-precision identical to that of the first quantized neural network model 11. Accordingly, the processor 130 may quantize the layers comprised in the neural network model 10 in [6bit, 5bit, 4bit], and acquire a second quantized neural network model 16. Alternatively, the processor 130 may quantize the layers comprised in the neural network model 10 in [4bit, 5bit, 6bit], and acquire a second quantized neural network model 17. Alternatively, the processor 130 may quantize the layers comprised in the neural network model 10 in [6bit, 5bit, 6bit], and acquire a second quantized neural network model 18. Then, when the plurality of second quantized neural network models comprising the second quantized neural network model are acquired, the processor 130 may transmit the plurality of second quantized neural network models comprising the second quantized neural network model to the target apparatus 200 in operation S310, but this is merely an example, and the processor 130 may transmit the test data 20 together with the plurality of second quantized neural network models comprising the second quantized neural network model to the target apparatus 200.

Then, the target apparatus 200 may perform inference of each of the plurality of second quantized neural network models comprising the second quantized neural network model by using the test data 20. For example, the target apparatus 200 may input the test data into each of the plurality of second quantized neural network models.

Here, the target apparatus 200 may perform inference of each of the plurality of second quantized neural network models by using the test data, and acquire result data output by each of the plurality of second quantized neural network models. Further, the target apparatus 200 may perform inference of each of the plurality of second quantized neural network models by using the test data, and acquire profile information of the target apparatus 200 related to each of the plurality of second quantized neural network models.

Then, the processor 130 may acquire the result data acquired from the quantized neural network models and the profile information of the target apparatus 200 related to the quantized neural network models from the target apparatus 200 in operation S315.

Then, the target apparatus 200 may transmit the result data for each of the plurality of second quantized neural network models and the profile information of the target apparatus 200 to the electronic apparatus 100. For example, the processor 130 may acquire, from the target apparatus 200, the result data acquired by performing inference of each of the plurality of second quantized neural network models by using the test data 20 and the profile information of the target apparatus 200 in operation S315.

Based on the acquired result data and profile information of the target apparatus 200, the processor 130 may identify a quantization error between the neural network model 10 and each of the plurality of second quantized neural network models in operation S320.

Then, the processor 130 may identify whether each of the plurality of second quantized neural network models satisfies the required performance condition. Specifically, the processor 130 may identify whether the profile information of the target apparatus 200 for each of the plurality of second quantized neural network models satisfies the required performance condition.

Then, the processor 130 may add a neural network model satisfying the required performance condition among the plurality of second quantized neural network models to the candidates 40 for the usable quantized neural network models in operation S325.

Then, the processor 130 may identify whether the number of the neural network models comprised in the candidates 40 for the usable quantized neural network models is smaller than the predetermined number k1 in operation S330.

Then, if the number of the neural network models comprised in the candidates 40 for the usable quantized neural network models is smaller than the predetermined number k1 in operation S330-Y, the processor 130 may acquire scores for each of the remaining neural network models excluding the neural network models comprised in the candidates 40 for the usable quantized neural network models among the quantized neural network models among the plurality of second quantized neural network models in operation S340.

If the number of the neural network models comprised in the candidates 40 for the usable quantized neural network models is smaller than the predetermined number k1 in operation S330-Y, based on the profile information and the quantization error, the processor 130 may acquire scores for each of the neural network models excluding the models comprised in the candidates 40 for the usable quantized neural network models among the plurality of second quantized neural network models.

Then, based on the acquired scores, the processor 130 may identify the neural network models in the predetermined number k2 among the neural network models excluding the models comprised in the candidates 40 for the usable quantized neural network models among the plurality of second quantized neural network models.

Specifically, the processor 130 may identify the neural network models in the predetermined number k2 in the order of having higher scores among the neural network models excluding the models comprised in the candidates 40 for the usable quantized neural network models among the plurality of second quantized neural network models in operation S345.

Here, the processor may identify neural network models satisfying the specific limiting condition among the neural network models excluding the models comprised in the candidates 40 for the usable quantized neural network models among the plurality of second quantized neural network models, and identify the neural network models in the predetermined number k2 among the neural network models satisfying the specific limiting condition.

Then, the electronic apparatus 100 may repeatedly perform the operations of quantizing the neural network models, and updating the candidates 40 for the usable quantized neural network models by the method as described above.

Accordingly, until the number of the models added to the candidates 40 for the usable quantized neural network models becomes greater than or equal to the predetermined number k1, the processor 130 may repeatedly perform the operation of updating the candidates 40 for the usable quantized neural network models.

Accordingly, if the number of the models comprised in the candidates 40 for the usable quantized neural network models becomes greater than or equal to the predetermined number k1 in operation S330-N, the processor 130 may identify the neural network model having the highest score among the neural network models comprised in the candidates 40 for the usable quantized neural network models in operation S335. Here, the method of acquiring scores for each of the neural network models comprised in the candidates 40 for the usable quantized neural network models may be as described above.

Then, when the neural network model having the highest score is identified among the candidates 40 for the usable quantized neural network models, the processor 130 may transmit the identified neural network model to the target apparatus 200. Here, the identified neural network model may be a usable quantized neural network model. For example, the identified neural network model may be a neural network model that was quantized to be suitable for the target apparatus 200.

Accordingly, the electronic apparatus 100 may acquire a neural network model that was quantized to be suitable for the target apparatus 200, and transmit the acquired quantized neural network model to the target apparatus 200.

Meanwhile, the processor 130 may perform the operation of quantizing the neural network model 10 by various methods.

Specifically, according to an embodiment of the disclosure, the (n+1)th bit-precision may be the bit-precision that is higher than the nth bit-precision by one step, but this is merely an example, and the (n+1)th bit-precision may be the bit-precision that is lower than the nth bit-precision by one step.

In case the (n+1)th bit-precision is the bit-precision that is higher than the nth bit-precision by one step, the quantization module 132 may quantize the neural network model 10 by the method as described above in the operations S305 and S350 (the first method).

Meanwhile, in case the (n+1)th bit-precision is the bit-precision that is lower than the nth bit-precision by one step, the quantization module 132 may quantize the neural network model 10 by the second method in the operations S305 and S350.

Specifically, according to the second method, if n is 1 in the operation S305, the processor 130 may quantize at least one layer among the plurality of layers comprised in the neural network model 10 with the first bit-precision, and quantize the remaining layers excluding the at least one layer among the plurality of layers with the highest bit-precision. Here, information on the highest bit-precision may be stored in the memory 110. The first bit-precision may be the bit-precision that is lower than the highest bit-precision by one step.

In the operation S305, if n is 2 or bigger, the processor 130 may quantize the neural network model 10 as in the operation in S350 that will be described below.

In the operation S350, the processor 130 may quantize at least one layer among the layers quantized with the highest bit-precision in one model among the neural network models in the predetermined number k2 with the (n+1)th bit-precision. Then, the processor 130 may quantize the layers excluding the at least one layer among the plurality of layers with the bit-precision identical to that of the one model.

Meanwhile, the processor 130 may quantize the neural network model 10 by using the first method or the second method, but this is merely an example, and the processor 130 may update the candidates 40 for the usable quantized neural network models by using the first method and the second method together.

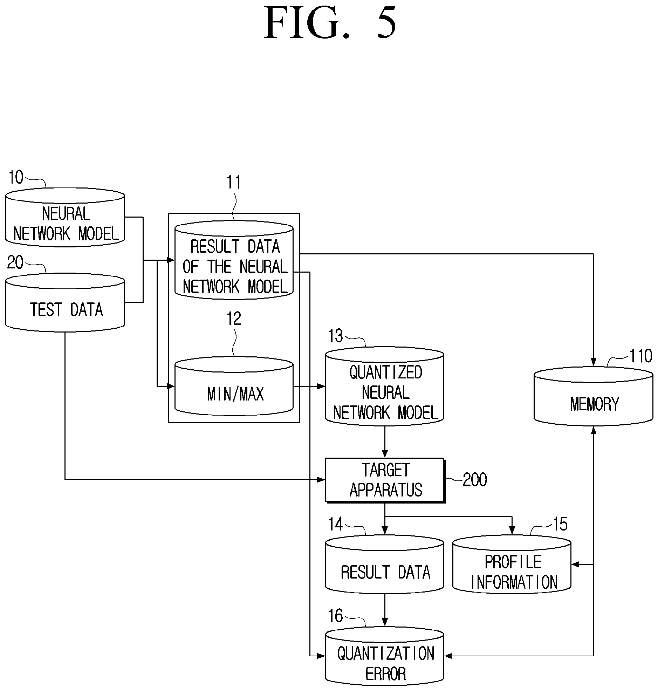

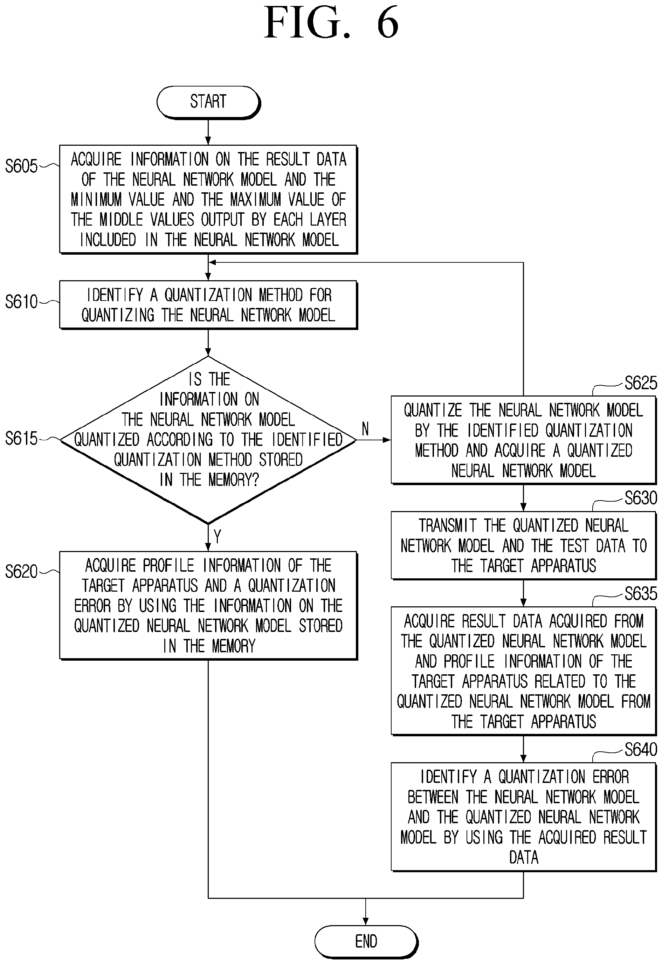

Meanwhile, the method for the electronic apparatus 100 to acquire profile information of the target apparatus 200 and a quantization error in the aforementioned operations S305, S310, S315, and S320 will be described with reference to FIGS. 5 and 6.

FIGS. 5 and 6 are diagrams for illustrating a method for the electronic apparatus 100 to acquire profile information of the target apparatus 200 and a quantization error according to various embodiments of the disclosure.

Referring to FIG. 5 and 6, the quantization module 132 may acquire the neural network model 10, the result data 11 of the neural network model 10 by using the test data 20, and information 12 on the minimum value and the maximum value of the middle values output by each layer comprised in the neural network model 10 in operation S605.

Then, the quantization module 132 may store the acquired result data 11 of the neural network model 10 and information 12 on the minimum value and the maximum value of the middle values output by each layer comprised in the neural network model 10 in the memory 110, but the disclosure is not limited thereto.

Here, if the result data 11 and the information 12 on the minimum value and the maximum value are stored in the memory 110, the quantization module 132 may not perform an operation of acquiring the result data 11 and the information 12 on the minimum value and the maximum value, and acquire a quantized neural network by using the information stored in the memory 110.

Then, by using the information 12 on the minimum value and the maximum value, the quantization module 132 may quantize the middle values output by each layer comprised in the neural network model 10 and quantize the weights comprised in each layer, and acquire a quantized neural network.

Specifically, the processor 130 may identify a quantization method, and acquire a neural network model 13 quantized according to the identified quantization method. Here, the processor 130 may identify whether to quantize the neural network model 10 according to the identified quantization method, depending on whether information on the neural network model 13 quantized according to the identified quantization method is stored in the memory 110.

Specifically, the processor 130 may identify a quantization method for quantizing the neural network model 10 in operation S610. For example, the identified quantization method may be a method of quantizing the second layer of the neural network model 10 with the first bit-precision, and quantizing the remaining layers with the lowest bit-precision.

Then, the processor 130 may identify whether the information on the neural network model 13 quantized according to the identified quantization method is stored in the memory 110 in operation S615. Here, the information on the quantized neural network model 13 may include a quantization error 16 between the quantized neural network model 13 and the neural network model 10, and profile information 15 of the target apparatus 200 related to the quantized neural network model 13.

Then, if the information on the neural network model 13 quantized according to the identified quantization method is stored in the memory 110 in operation S615-Y, the processor 130 may acquire the profile information 15 of the target apparatus 200 related to the quantized neural network model 13 and the quantization error 16 between the quantized neural network model 13 and the neural network model 10 by using the information on the quantized neural network model 13 stored in the memory 110 in operation S620. For example, if the information on the neural network model 13 quantized according to the identified quantization method is stored in the memory 110, a process wherein the electronic apparatus 100 quantizes the neural network model 10 according to the identified quantization method, and acquires the profile information 15 and the quantization error 16 by using the quantized neural network model 13 may be omitted. Accordingly, the resources and time incurred for the electronic apparatus 100 to update the candidates 40 for the usable quantized neural network models, and acquire a neural network model quantized to be suitable for the target apparatus 200 can be minimized.

If the information on the neural network model 13 quantized according to the identified quantization method is not stored in the memory 110 in operation S615-N, the processor 130 may quantize the neural network model 10 according to the identified quantization method, and acquire the quantized neural network model 13 in operation S625.

Then, the processor 130 may transmit the quantized neural network model 13 and the test data 20 to the target apparatus 200 in operation S630, and acquire the result data 14 for the quantized neural network model 13 and the profile information 15 of the target apparatus 200 from the target apparatus 200 in operation S635. Then, the processor 130 may store the acquired profile information of the target apparatus 200 in the memory 110.

Then, the processor 130 may identify the quantization error 16 regarding the quantized neural network model 13 by using the acquired result data 14 and the result data 11 of the neural network model 10 in operation S640. Then, the processor 130 may store the acquired quantization error in the memory 110.

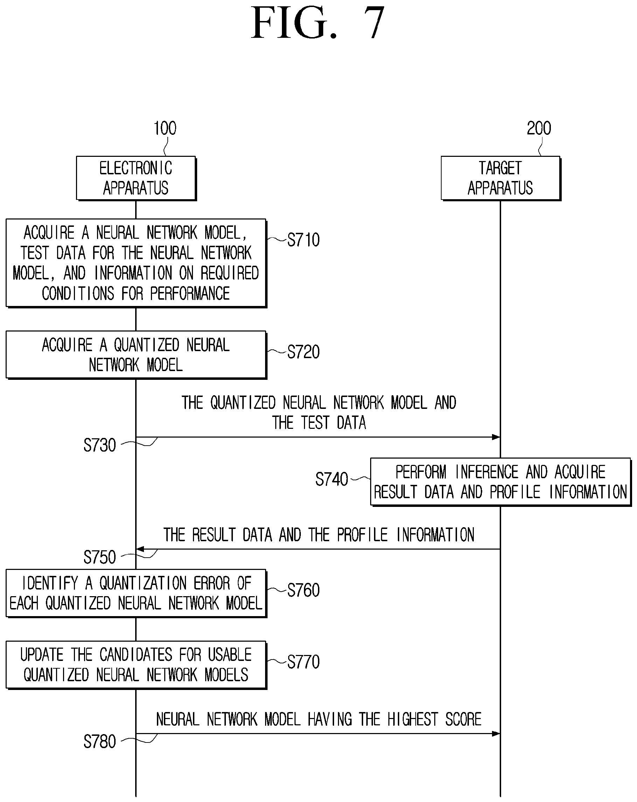

FIG. 7 is a sequence diagram for illustrating operations of an electronic apparatus and a target apparatus according to an embodiment of the disclosure.

Referring to FIG. 7, the electronic apparatus 100 may acquire a neural network model 10, test data 20 for the neural network model, and information 30 on required performance condition in operation S710.

Then, the electronic apparatus 100 may quantize the neural network model 10 with the nth bit-precision and acquire a first quantized neural network model in operation S720.

Then, the electronic apparatus 100 may transmit the first quantized neural network model and the test data 20 to the target apparatus 200 in operation S730.

Accordingly, the target apparatus 200 may perform inference of each first quantized neural network model by using the test data 20. Accordingly, the target apparatus 200 may acquire result data acquired by performing the inference of the first quantized neural network model and profile information of the target apparatus 200 related to the first quantized neural network model in operation S740.

Then, the electronic apparatus 100 may receive the result data and the profile information from the target apparatus 200 in operation S750.

When the result data and the profile information are received, the electronic apparatus 100 may identify a quantization error of the first quantized neural network model by using the result data in operation S760.

Then, if the first quantized neural network model satisfies the required performance condition, the electronic apparatus 100 may add the first quantized neural network model to the candidates 40 for the usable quantized neural network models in operation S770.

Then, the electronic apparatus 100 and the target apparatus 200 may repeatedly perform the operations S720 to S760 until the number of the models comprised in the candidates 40 for the usable quantized neural network models becomes greater than or equal to a predetermined number.

Then, if the number of the models comprised in the candidates 40 for the usable quantized neural network models becomes greater than or equal to the predetermined number, the electronic apparatus 100 may transmit the model having the highest score among the models comprised in the candidates 40 for the usable quantized neural network models to the target apparatus 200 in operation S780.

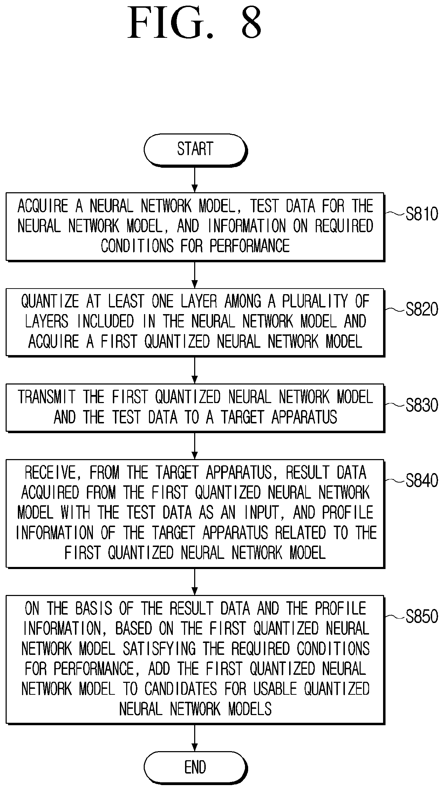

FIG. 8 is a flowchart for illustrating a control method of an electronic apparatus according to an embodiment of the disclosure.

Referring to FIG. 8, the electronic apparatus 100 may acquire a neural network model 10, test data 20 for the neural network model, and information 30 on required performance condition in operation S810.

Then, the electronic apparatus 100 may quantize at least one layer among a plurality of layers comprised in the neural network model 10 and acquire a first quantized neural network model in operation S820. Here, the electronic apparatus 100 may quantize at least one layer among the plurality of layers comprised in the neural network model 10 with first bit-precision and acquire the first quantized neural network model.

Here, the electronic apparatus 100 may quantize the at least one layer among the plurality of layers comprised in the neural network model 10 and acquire a plurality of first quantized neural network models comprising the first quantized neural network model.

Specifically, the electronic apparatus 100 may vary layers to be quantized among the plurality of layers comprised in the neural network model 10, and acquire a plurality of first quantized neural network models comprising the first quantized neural network model.

Then, the electronic apparatus 100 may transmit the first quantized neural network model and the test data 20 to the target apparatus 200 in operation S830.

Then, the electronic apparatus 100 may receive, from the target apparatus 200, result data acquired from the first quantized neural network model with the test data 20 as an input, and profile information of the target apparatus 200 related to the first quantized neural network model in operation S840.

Here, the profile information of the target apparatus 200 related to the first quantized neural network model may include at least one of inference latency incurred while the target apparatus 200 was performing inference of the first quantized neural network model, the memory use amount of the target apparatus 200, or the power consumption of the target apparatus 200.

Thereafter, based on the result data and the profile information, if the first quantized neural network model satisfies the required performance condition, the electronic apparatus 100 may add the first quantized neural network model to candidates 40 for usable quantized neural network models in operation S850.

Meanwhile, if a quantization error regarding the first quantized neural network model and the profile information of the target apparatus related to the first quantized neural network model are stored in the memory 110, the electronic apparatus 100 may add the first quantized neural network model to the candidates 40 for the usable quantized neural network models by using the quantization error and the profile information stored in the memory **110.**

Then, if the number of the models comprised in the candidates 40 for the usable quantized neural network models is greater than or equal to a predetermined number, the electronic apparatus 100 may acquire scores indicating suitability for the required performance condition for each of the neural network models comprised in the candidates 40 for the usable quantized neural network models. Then, the electronic apparatus 100 may identify a neural network model having the highest score among the neural network models comprised in the candidates 40 for the usable quantized neural network models. Then, the electronic apparatus 100 may transmit the identified neural network model having the highest score to the target apparatus 200.

Meanwhile, if the number of the models comprised in the candidates 40 for the usable quantized neural network models is smaller than the predetermined number, and the first quantized neural network model does not satisfy the required performance condition, the electronic apparatus 100 may quantize the neural network model 10 with second bit-precision and acquire a second quantized neural network model.

Specifically, if the number of the models comprised in the candidates 40 for the usable quantized neural network models is smaller than the predetermined number, the electronic apparatus 100 may acquire scores indicating suitability for the required performance condition for each of the models excluding the models comprised in the candidates 40 for the usable quantized neural network models among the plurality of first quantized neural network models.

Then, the electronic apparatus 100 may identify the neural network models in the predetermined number in the order of having the higher scores among the neural network models excluding the neural network models comprised in the candidates 40 for the usable quantized neural network models among the plurality of first quantized neural network models.

Here, the electronic apparatus 100 may identify neural network models satisfying a limiting condition among the neural network models excluding the models comprised in the candidates 40 for the usable quantized neural network models among the plurality of first quantized neural network models. Then, the electronic apparatus 100 may acquire scores indicating suitability for the required performance condition for each of the neural network models satisfying the limiting condition. Then, the electronic apparatus 100 may identify the neural network models in the predetermined number in the order of having the higher scores among the neural network models satisfying the limiting condition.

Meanwhile, the electronic apparatus 100 may identify the predetermined number based on at least one of the number of the layers comprised in the neural network model 10 or the information on the performance of the electronic apparatus 100.

Then, based on the information on the neural network models in the predetermined number, the electronic apparatus 100 may quantize the neural network model 10 with the second bit-precision, and acquire a plurality of second quantized neural network models comprising the second quantized neural network model.

Specifically, based on the information on the bit-precision with which the neural network models in the predetermined number were quantized, the electronic apparatus 100 may quantize at least one layer among the plurality of layers comprised in the neural network model 10 with the second bit-precision, and acquire a plurality of second quantized neural network models comprising the second quantized neural network model.

Then, the electronic apparatus 100 may transmit the second quantized neural network model to the target apparatus 200. Based on the result data acquired from the second quantized neural network model and the profile information of the target apparatus 200 related to the second quantized neural network model, if the second quantized neural network model satisfies the required performance condition, the electronic apparatus 100 may add the second quantized neural network model to the candidates 40 for the usable quantized neural network models.

Meanwhile, the term "a part" or "a module" used in the disclosure may include a unit implemented as hardware, software, or firmware, and may be interchangeably used with, for example, terms, such as a logic, a logical block, a component, or a circuit. In addition, "a part" or "a module" may be a component constituted as an integrated body or a minimum unit or a part thereof performing one or more functions. For example, a module may be constituted as an application-specific integrated circuit (ASIC).

The various embodiments of the disclosure may be implemented as software comprising instructions stored in machine-readable storage media, which can be read by machines (e.g., computers). The machines refer to apparatuses that call instructions stored in a storage medium, and can operate according to the called instructions, and the apparatuses may include the electronic apparatus 100 according to the aforementioned embodiments. In case an instruction is executed by a processor, the processor may perform a function corresponding to the instruction by itself, or by using other components under its control. An instruction may include a code that is generated or executed by a compiler or an interpreter. A storage medium that is readable by machines may be provided in the form of a non-transitory storage medium. Here, the term 'non-transitory' only means that a storage medium does not include signals, and is tangible, but does not indicate whether data is stored in the storage medium semi-permanently or temporarily.

In addition, according to one or more embodiments of the disclosure, the method according to the various embodiments described in the disclosure may be provided while being comprised in a computer program product. A computer program product refers to a product, and it can be traded between a seller and a buyer. A computer program product can be distributed in the form of a storage medium that is readable by machines (e.g., a compact disc read only memory (CD-ROM)), or may be distributed on-line through an application store (e.g., PlayStoreTM). In the case of on-line distribution, at least a portion of a computer program product may be stored in a storage medium, such as the server of the manufacturer, the server of the application store, and the memory of the relay server at least temporarily, or may be generated temporarily.

Further, each of the components (e.g., a module or a program) according to the various embodiments may consist of a singular object or a plurality of objects. In addition, among the aforementioned corresponding sub components, some sub components may be omitted, or other sub components may be further comprised in the various embodiments. Alternatively or additionally, some components (e.g., a module or a program) may be integrated as an object, and perform functions that were performed by each of the components before integration identically or in a similar manner. In addition, operations performed by a module, a program, or other components according to the various embodiments may be executed sequentially, in parallel, repetitively, or heuristically. Alternatively, at least some of the operations may be executed in a different order or omitted, or other operations may be added.

While the disclosure has been shown and described with reference to various embodiments thereof, it will be understood by those skilled in the art that various changes in form and details may be made therein without departing from the spirit and scope of the disclosure as defined by the appended claims and their equivalents.

**Claims**

1. An electronic apparatus comprising:

    a communication interface;
    a memory; and
    at least one processor,
    wherein the at least one processor is configured to:

        acquire a neural network model, test data for the neural network model, and information on required performance condition,
        quantize at least one layer among a plurality of layers comprised in the neural network model and acquire a first quantized neural network model,
control the communication interface to transmit the first quantized neural network model and the test data to a target apparatus,
receive, from the target apparatus, result data acquired from the first quantized neural network model with the test data as an input, and profile information of the target apparatus related to the first quantized neural network model through the communication interface, and
based on the result data and the profile information, based on the first quantized neural network model satisfying the required performance condition, add the first quantized neural network model to available quantized neural network model candidates.

2. The electronic apparatus of claim 1,
wherein the at least one processor is further configured to:

quantize the at least one layer among the plurality of layers comprised in the neural network model with first bit-precision and acquire the first quantized neural network model, and
based on a number of neural network models comprised in the quantized neural network model candidates being smaller than a predetermined number and the first quantized neural network model not satisfying the required performance condition, quantize the neural network model with second bit-precision and acquire a second quantized neural network model.

3. The electronic apparatus of claim 2,
wherein the at least one processor is further configured to:

transmit the second quantized neural network model to the target apparatus,
receive, from the target apparatus, result data acquired from the second quantized neural network model, and profile information of the target apparatus related to the second quantized neural network model, and
based on the result data acquired from the second quantized neural network model and the profile information of the target apparatus related to the second quantized neural network model, based on the second quantized neural network model satisfying the required performance condition, add the second quantized neural network model to the available quantized neural network model candidates.

4. The electronic apparatus of claim 1,
wherein the at least one processor is further configured to:

vary a layer to be quantized among the plurality of layers comprised in the neural network model and acquire a plurality of first quantized neural network models comprising the first quantized neural network model, and
based on a number of neural network models comprised in the available quantized neural network model candidates being smaller than a predetermined number, acquire scores indicating suitability for the required performance condition for each model excluding models comprised in the available quantized neural network model candidates among the plurality of first quantized neural network models.

5. The electronic apparatus of claim 4,
wherein the at least one processor is further configured to:
identify the neural network models in the predetermined number in an order of having higher scores among the models excluding the models comprised in the available quantized neural network model candidates.

6. The electronic apparatus of claim 5,
wherein the at least one processor is further configured to:
quantize the neural network model with second bit-precision based on a quantization method by which the neural network models in the predetermined number were quantized and acquire a second quantized neural network model.

7. The electronic apparatus of claim 4,
wherein the predetermined number is determined by at least one of the number of layers comprised in the neural network model or performance of the electronic apparatus.

8. The electronic apparatus of claim 4,
wherein the at least one processor is further configured to:

identify neural network models satisfying a limiting condition among the models excluding the models comprised in the available quantized neural network model candidates,
acquire scores indicating suitability for the required performance condition for each of the neural network models satisfying the limiting condition, and
identify the neural network models in the predetermined number in an order of having higher scores among the neural network models satisfying the limiting condition.

9.  The electronic apparatus of claim 1,
    wherein the at least one processor is further configured to:

    based on a number of neural network models comprised in the available quantized neural network model candidates being greater than or equal to a predetermined number, acquire scores indicating suitability for the required performance condition for each of the neural network models comprised in the available quantized neural network model candidates,
    identify a neural network model having highest score among the neural network models comprised in the quantized neural network model candidates, and
    control the communication interface to transmit identified neural network model to the target apparatus.

10. The electronic apparatus of claim 1,
    wherein the at least one processor is further configured to:
    based on a quantization error regarding the first quantized neural network model and the profile information of the target apparatus related to the first quantized neural network model being stored in the memory, add the first quantized neural network model in the available quantized neural network model candidates by using the quantization error and the profile information stored in the memory.

11. The electronic apparatus of claim 1,
    wherein the profile information comprises:
    at least one of inference latency incurred while the target apparatus was performing inference of the first quantized neural network model, memory use amount of the target apparatus, or power consumption of the target apparatus.

12. A method of controlling an electronic apparatus, the method comprising:

    acquiring a neural network model, test data for the neural network model, and information on required performance condition;
    quantizing at least one layer among a plurality of layers comprised in the neural network model and acquiring a first quantized neural network model;
    transmitting the first quantized neural network model and the test data to a target apparatus;
    receiving, from the target apparatus, result data acquired from the first quantized neural network model with the test data as an input, and profile information of the target apparatus related to the first quantized neural network model; and
    based on the result data and the profile information, based on the first quantized neural network model satisfying the required performance condition, adding the first quantized neural network model to available quantized neural network model candidates.

13. The method of claim 12,
    wherein the acquiring of the first quantized neural network model comprises:

    quantizing the at least one layer among the plurality of layers comprised in the neural network model with first bit-precision and acquiring the first quantized neural network model, and
    wherein the method further comprises:
    based on a number of neural network models comprised in the quantized neural network model candidates being smaller than a predetermined number and the first quantized neural network model not satisfying the required performance condition, quantizing the neural network model with second bit-precision and acquiring a second quantized neural network model.

14. The method of claim 13, further comprising:

    transmitting the second quantized neural network model to the target apparatus;

receiving, from the target apparatus, result data acquired from the second quantized neural network model, and profile information of the target apparatus related to the second quantized neural network model; and based on the result data acquired from the second quantized neural network model and the profile information of the target apparatus related to the second quantized neural network model, based on the second quantized neural network model satisfying the required performance condition, adding the second quantized neural network model to the available quantized neural network model candidates.

15. The method of claim 12,
wherein the acquiring of the first quantized neural network model comprises:

varying layers to be quantized among the plurality of layers comprised in the neural network model and acquiring a plurality of first quantized neural network models comprising the first quantized neural network model, and wherein the method further comprises:
based on a number of neural network models comprised in the available quantized neural network model candidates being smaller than a predetermined number, acquiring scores indicating suitability for the required performance condition for each model excluding models comprised in the available quantized neural network model candidates among the plurality of first quantized neural network models.

# FIG. 1

100

| 110 | MEMORY | | PROCESSOR | 130 |

NEURAL NETWORK MODEL ACQUISITION MODULE — 131

120 — COMMUNICATION INTERFACE

QUANTIZATION MODULE — 132

PROFILE ACQUISITION MODULE — 133

QUANTIZATION ERROR IDENTIFICATION MODULE — 134

NEURAL NETWORK MODEL SELECTION MODULE — 135

# FIG. 2

# FIG. 3

START

S305 — QUANTIZE WITH NTH BIT-PRECISION

S310 — TRANSMIT A QUANTIZED NEURAL NETWORK MODEL AND TEST DATA TO THE TARGET APPARATUS

S315 — ACQUIRE RESULT DATA ACQUIRED FROM THE QUANTIZED NEURAL NETWORK MODEL AND PROFILE INFORMATION OF THE TARGET APPARATUS RELATED TO THE QUANTIZED NEURAL NETWORK MODEL FROM THE TARGET APPARATUS

S320 — IDENTIFY A QUANTIZATION ERROR BETWEEN THE NEURAL NETWORK MODEL AND THE QUANTIZED NEURAL NETWORK MODEL BY USING THE ACQUIRED RESULT DATA

S325 — ADD A NEURAL NETWORK MODEL SATISFYING THE REQUIRED CONDITIONS FOR PERFORMANCE AMONG THE QUANTIZED NEURAL NETWORK MODELS TO THE CANDIDATES FOR THE USABLE QUANTIZED NEURAL NETWORK MODELS

S330 — IS THE NUMBER OF THE MODELS ADDED TO THE CANDIDATES FOR THE USABLE QUANTIZED NEURAL NETWORK MODELS SMALLER THAN A PREDETERMINED NUMBER K1?

S350 — QUANTIZE THE NEURAL NETWORK MODEL WITH THE (N+1)TH BIT-PRECISION

S345 — IDENTIFY NEURAL NETWORK MODELS IN A PREDETERMINED NUMBER K2 IN THE ORDER OF HAVING HIGHER SCORES AMONG THE REMAINING MODELS

S340 — ACQUIRE SCORES FOR THE REMAINING MODELS AMONG THE QUANTIZED NEURAL NETWORK MODELS

Y

N

S335 — IDENTIFY A NEURAL NETWORK MODEL HAVING THE HIGHEST SCORE AMONG THE CANDIDATES FOR THE USABLE QUANTIZED NEURAL NETWORK MODELS

END

# FIG. 4

EP 4 546 216 A1

# FIG. 5

# FIG. 6

```
                         ┌──────────┐
                         │  START   │
                         └────┬─────┘
                              │
        ┌─────────────────────────────────────────────────┐
 S605───│ ACQUIRE INFORMATION ON THE RESULT DATA           │
        │ OF THE NEURAL NETWORK MODEL AND THE              │
        │ MINIMUM VALUE AND THE MAXIMUM VALUE OF           │
        │ THE MIDDLE VALUES OUTPUT BY EACH LAYER           │
        │ INCLUDED IN THE NEURAL NETWORK MODEL             │
        └─────────────────────┬───────────────────────────┘
                              │
        ┌─────────────────────────────────────────────────┐
 S610───│ IDENTIFY A QUANTIZATION METHOD FOR              │
        │ QUANTIZING THE NEURAL NETWORK MODEL             │
        └─────────────────────┬───────────────────────────┘
                              │
                         ◇ IS THE                       ┌──S625
 S615───    INFORMATION ON              ┌─────────────────────────────────┐
         THE NEURAL NETWORK MODEL    N  │ QUANTIZE THE NEURAL NETWORK MODEL│
       QUANTIZED ACCORDING TO THE ──────│ BY THE IDENTIFIED QUANTIZATION   │
       IDENTIFIED QUANTIZATION          │ METHOD AND ACQUIRE A QUANTIZED    │
       METHOD STORED IN THE MEMORY?     │ NEURAL NETWORK MODEL             │
                    │ Y                 └────────────────┬────────────────┘
                                                        │  ┌──S630
        ┌─────────────────────────────┐  ┌─────────────────────────────────┐
 S620───│ ACQUIRE PROFILE INFORMATION │  │ TRANSMIT THE QUANTIZED NEURAL    │
        │ OF THE TARGET APPARATUS AND │  │ NETWORK MODEL AND THE TEST DATA  │
        │ A QUANTIZATION ERROR BY     │  │ TO THE TARGET APPARATUS          │
        │ USING THE INFORMATION ON THE│  └────────────────┬────────────────┘
        │ QUANTIZED NEURAL NETWORK    │                   │  ┌──S635
        │ MODEL STORED IN THE MEMORY  │  ┌─────────────────────────────────┐
        └──────────────┬──────────────┘  │ ACQUIRE RESULT DATA ACQUIRED FROM│
                       │                 │ THE QUANTIZED NEURAL NETWORK MODEL│
                       │                 │ AND PROFILE INFORMATION OF THE   │
                       │                 │ TARGET APPARATUS RELATED TO THE  │
                       │                 │ QUANTIZED NEURAL NETWORK MODEL   │
                       │                 │ FROM THE TARGET APPARATUS        │
                       │                 └────────────────┬────────────────┘
                       │                                  │  ┌──S640
                       │                 ┌─────────────────────────────────┐
                       │                 │ IDENTIFY A QUANTIZATION ERROR    │
                       │                 │ BETWEEN THE NEURAL NETWORK MODEL │
                       │                 │ AND THE QUANTIZED NEURAL NETWORK │
                       │                 │ MODEL BY USING THE ACQUIRED      │
                       │                 │ RESULT DATA                      │
                       │                 └────────────────┬────────────────┘
                       │                                  │
                       └──────────────┬───────────────────┘
                                 ┌──────────┐
                                 │   END    │
                                 └──────────┘
```

# FIG. 7

```
        100                                                    200
    ┌──────────────┐                                      ┌──────────────┐
    │  ELECTRONIC  │                                      │   TARGET     │
    │  APPARATUS   │                                      │  APPARATUS   │
    └──────────────┘                                      └──────────────┘
```

┌─────────────────────────────────────────┐
│ ACQUIRE A NEURAL NETWORK MODEL,          │ ∼S710
│ TEST DATA FOR THE NEURAL NETWORK         │
│ MODEL, AND INFORMATION ON REQUIRED       │
│ CONDITIONS FOR PERFORMANCE               │
└─────────────────────────────────────────┘

┌─────────────────────────────────────────┐
│ ACQUIRE A QUANTIZED NEURAL               │ ∼S720
│ NETWORK MODEL                            │
└─────────────────────────────────────────┘

THE QUANTIZED NEURAL NETWORK MODEL AND
THE TEST DATA

S730

┌─────────────────────────────────────────────────┐
│ S740 ∼  PERFORM INFERENCE AND ACQUIRE           │
│         RESULT DATA AND PROFILE INFORMATION      │
└─────────────────────────────────────────────────┘

THE RESULT DATA AND THE PROFILE INFORMATION

S750

┌─────────────────────────────────────────┐
│ IDENTIFY A QUANTIZATION ERROR OF         │ ∼S760
│ EACH QUANTIZED NEURAL NETWORK MODEL      │
└─────────────────────────────────────────┘

┌─────────────────────────────────────────┐
│ UPDATE THE CANDIDATES FOR USABLE         │ ∼S770
│ QUANTIZED NEURAL NETWORK MODELS          │
└─────────────────────────────────────────┘

NEURAL NETWORK MODEL HAVING THE HIGHEST SCORE

S780

# FIG. 8

START

ACQUIRE A NEURAL NETWORK MODEL, TEST DATA FOR THE NEURAL NETWORK MODEL, AND INFORMATION ON REQUIRED CONDITIONS FOR PERFORMANCE — S810

QUANTIZE AT LEAST ONE LAYER AMONG A PLURALITY OF LAYERS INCLUDED IN THE NEURAL NETWORK MODEL AND ACQUIRE A FIRST QUANTIZED NEURAL NETWORK MODEL — S820

TRANSMIT THE FIRST QUANTIZED NEURAL NETWORK MODEL AND THE TEST DATA TO A TARGET APPARATUS — S830

RECEIVE, FROM THE TARGET APPARATUS, RESULT DATA ACQUIRED FROM THE FIRST QUANTIZED NEURAL NETWORK MODEL WITH THE TEST DATA AS AN INPUT, AND PROFILE INFORMATION OF THE TARGET APPARATUS RELATED TO THE FIRST QUANTIZED NEURAL NETWORK MODEL — S840

ON THE BASIS OF THE RESULT DATA AND THE PROFILE INFORMATION, BASED ON THE FIRST QUANTIZED NEURAL NETWORK MODEL SATISFYING THE REQUIRED CONDITIONS FOR PERFORMANCE, ADD THE FIRST QUANTIZED NEURAL NETWORK MODEL TO CANDIDATES FOR USABLE QUANTIZED NEURAL NETWORK MODELS — S850

END

| INTERNATIONAL SEARCH REPORT | International application No. |
|---|---|
| | **PCT/KR2023/018220** |

| A. | CLASSIFICATION OF SUBJECT MATTER |
|---|---|

**G06N 3/0495**(2023.01)i; **G06N 3/045**(2023.01)i; **G06N 3/08**(2006.01)i

According to International Patent Classification (IPC) or to both national classification and IPC

| B. | FIELDS SEARCHED |
|---|---|

Minimum documentation searched (classification system followed by classification symbols)

G06N 3/0495(2023.01); G06F 17/15(2006.01); G06N 3/04(2006.01); G06N 3/08(2006.01); H04N 19/124(2014.01); H04N 19/13(2014.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 신경망 모델(neural network model), 양자화(quantization), 레이어(layer), 결과(result), 비교(comparing), 조건(condition), 점수(score)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | KR 10-2022-0013946 A (SHANGHAI SENSETIME INTELLIGENT TECHNOLOGY CO., LTD.) 04 February 2022 (2022-02-04)<br>See paragraphs [0038], [0044]-[0046], [0068], [0074], [0077] and [0110]; claim 7; and figures 4 and 7. | 1-3,10-14 |
| Y | | 4-9,15 |
| Y | CN 110738313 B (APOLLO INTELLIGENT TECHNOLOGY (BEIJING) CO., LTD.) 31 May 2022 (2022-05-31)<br>See claim 6. | 4-9,15 |
| A | KR 10-2022-0075680 A (KOREA ELECTRONICS TECHNOLOGY INSTITUTE) 08 June 2022 (2022-06-08)<br>See paragraphs [0045]-[0073]; and figures 1-5. | 1-15 |
| A | KR 10-2019-0068255 A (SAMSUNG ELECTRONICS CO., LTD.) 18 June 2019 (2019-06-18)<br>See paragraphs [0036]-[0053]; and figures 3-4. | 1-15 |

☑ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **14 February 2024** | **14 February 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

<table>
<tr><td colspan="2">International application No.</td></tr>
<tr><td colspan="2">**PCT/KR2023/018220**</td></tr>
</table>

**C.    DOCUMENTS CONSIDERED TO BE RELEVANT**

| Category* | Citation of document, with indication, where appropriate, of the relevant passages | Relevant to claim No. |
|---|---|---|
| A | KR 10-2021-0011462 A (SHANGHAI CAMBRICON INFORMATION TECHNOLOGY CO., LTD.) 01 February 2021 (2021-02-01)<br>See claims 1-17. | 1-15 |

Form PCT/ISA/210 (second sheet) (July 2022)

<table>
<tr><td colspan="2">INTERNATIONAL SEARCH REPORT<br>Information on patent family members</td><td colspan="2">International application No.<br><br>**PCT/KR2023/018220**</td></tr>
</table>

| Patent document<br>cited in search report | Publication date<br>(day/month/year) | Patent family member(s) | Publication date<br>(day/month/year) |
|---|---|---|---|
| KR 10-2022-0013946 A | 04 February 2022 | CN 111598237 A | 28 August 2020 |
|  |  | JP 2022-540298 A | 15 September 2022 |
|  |  | TW 202145142 A | 01 December 2021 |
|  |  | WO 2021-233069 A1 | 25 November 2021 |
| CN 110738313 B | 31 May 2022 | CN 110738313 A | 31 January 2020 |
| KR 10-2022-0075680 A | 08 June 2022 | None | |
| KR 10-2019-0068255 A | 18 June 2019 | CN 110020717 A | 16 July 2019 |
|  |  | US 11694073 B2 | 04 July 2023 |
|  |  | US 2019-0180177 A1 | 13 June 2019 |
| KR 10-2021-0011462 A | 01 February 2021 | CN 111652367 A | 11 September 2020 |
|  |  | CN 111652368 A | 11 September 2020 |
|  |  | CN 112085181 A | 15 December 2020 |
|  |  | CN 112085183 A | 15 December 2020 |
|  |  | CN 112085184 A | 15 December 2020 |
|  |  | CN 112085185 A | 15 December 2020 |
|  |  | CN 112085186 A | 15 December 2020 |
|  |  | CN 112085188 A | 15 December 2020 |
|  |  | CN 112085189 A | 15 December 2020 |
|  |  | CN 112085190 A | 15 December 2020 |
|  |  | CN 112085191 A | 15 December 2020 |
|  |  | CN 112085192 A | 15 December 2020 |
|  |  | CN 112085193 A | 15 December 2020 |
|  |  | CN 112400176 A | 23 February 2021 |
|  |  | EP 3770823 A1 | 27 January 2021 |
|  |  | EP 3770823 A4 | 27 January 2021 |
|  |  | EP 3772022 A1 | 03 February 2021 |
|  |  | EP 3772023 A1 | 03 February 2021 |
|  |  | EP 3998554 A1 | 18 May 2022 |
|  |  | EP 3998554 A4 | 15 November 2023 |
|  |  | JP 2021-177369 A | 11 November 2021 |
|  |  | JP 2021-179966 A | 18 November 2021 |
|  |  | JP 2021-530769 A | 11 November 2021 |
|  |  | JP 7166704 B2 | 08 November 2022 |
|  |  | JP 7167405 B2 | 09 November 2022 |
|  |  | KR 10-2021-0011461 A | 01 February 2021 |
|  |  | KR 10-2021-0018352 A | 17 February 2021 |
|  |  | KR 10-2609719 B1 | 04 December 2023 |
|  |  | US 11675676 B2 | 13 June 2023 |
|  |  | US 2021-0286688 A1 | 16 September 2021 |
|  |  | US 2022-0261634 A1 | 18 August 2022 |
|  |  | WO 2020-248423 A1 | 17 December 2020 |
|  |  | WO 2020-248424 A1 | 17 December 2020 |

Form PCT/ISA/210 (patent family annex) (July 2022)